Europäisches Patentamt

European Patent Office

Office européen des brevets

(19)

(11) Veröffentlichungsnummer : **0 386 568 B1**

(12) # EUROPÄISCHE PATENTSCHRIFT

(45) Veröffentlichungstag der Patentschrift :
23.12.92 Patentblatt 92/52

(51) Int. Cl.$^5$ : **B65F 1/14**

(21) Anmeldenummer : **90103659.0**

(22) Anmeldetag : **26.02.90**

(54) **Müllbehälter mit Durchlüftungssystem.**

(30) Priorität : **08.03.89 DE 3907475**

(43) Veröffentlichungstag der Anmeldung :
**12.09.90 Patentblatt 90/37**

(45) Bekanntmachung des Hinweises auf die
Patenterteilung :
**23.12.92 Patentblatt 92/52**

(84) Benannte Vertragsstaaten :
**AT BE CH DE DK ES FR GB GR IT LI LU NL SE**

(56) Entgegenhaltungen :
**EP-A- 0 271 719
DE-C- 3 517 262
DE-U- 8 815 827**

(73) Patentinhaber : **Fritz Schäfer Gesellschaft mit
beschränkter Haftung
Fritz-Schäfer-Strasse 20
W-5908 Neunkirchen (DE)**

(72) Erfinder : **Schäfer, Gerhard
Oberes Gerstenfeld 2
W-5908 Neunkirchen-Salchendorf (DE)**
Erfinder : **Kowald, Rainer, Prof.Dr.
Finkenbusch 1
W-6307 Linden (DE)**

(74) Vertreter : **Müller, Gerd et al
Patentanwälte
HEMMERICH-MÜLLER-GROSSE-POLLMEIER-
MEY-VALENTIN Hammerstrasse 2
W-5900 Siegen 1 (DE)**

EP 0 386 568 B1

## Beschreibung

Die Erfindung betrifft einen Müllbehälter mit Durchlüftungssystem zur Aufnahme von kompostierfähigen Abfällen, entsprechend den Merkmalen des ersten Teils des Anspruchs 1.

Ein solder Müllbehälter zur Aufnahme von kompostierfähigen Abfällen ist bereits durch die DE-OS 36 42 761 & EP-A-271719 bekannt. Er weist mit Abstand oberhalb des Gefäßbodens als Abfallträger einen von einem Lochblech gebildeten Siebeinsatz auf, der als Klappboden im Inneren des Aufnahmegefäßes angelenkt ist. Darüber hinaus ist das Aufnahmegefäß dieses Müllbehälters in seinen Seitenwandungen einerseits unterhalb des Siebeinsatzes sowie andererseits mit Abstand unterhalb seines Öffnungsrandes mit Luftdurchtrittsöffnungen versehen.

Die Praxis hat gezeigt, daß in einem solchen Müllbehälter ein Abbau der kompostierfähigen Abfälle nur zu einem geringen Teil auf aerobem Wege stattfinden kann, also in überwiegendem Maße anaerob abläuft und dadurch unerwünschte Geruchsbelästigungen verursacht.

Dieser überwiegend anaerobe Abbau der kompostierfähigen Abfälle hat dabei seine Ursache einerseits darin, daß nur eine unzureichende Durchlüftung der zu der zu verschiedenen Zeiten nacheinander gebildeten bzw. aufgebauten Abfallschichten stattfindet. Da der Wassergehalt der unteren Abfallschichten durch Sickerwasser ständig erhöht wird, werden auch zunächst auf aerobem Wege stattfindende Abbauprozesse unterbrochen, die anschließend in anaerobe Abbauprozesse übergehen.

Der Erfindung liegt die Aufgabe zugrunde, einen Müllbehälter mit Durchlüftungssystem zur Aufnahme von kompostierfähigen Abfällen anzugeben, welches mit einfachen Mitteln das Entstehen und die Aufrechterhaltung aerober Abbauprozesse begünstigt und folglich der Ausbildung anaerober Abbauprozesse mehr als bisher entgegenwirkt.

Erreicht wird dieses Ziel nach der Erfindung mit Hilfe der Merkmale des Anspruchs 1, also dadurch, daß der Zwischenboden aus einem Gitterrost besteht, der eine im Verhältnis zu seiner Stegbreite große Maschenweite aufweist, daß - vorzugsweise - den Innenflächen der Wandungen des Aufnahmegefäßes zumindest über dessen oberhalb des Gitterrostes gelegenen Höhenbereich hinweg verlaufende Abstandshalter für die Abfälle zugeordnet sind und daß der Deckel mit Entlüftungsöffnungen versehen ist. Als wichtig kann es sich dabei erweisen, daß gemäß Anspruch 2 der Gesamtquerschnitt der Lüftungsöffnungen und der Entlüftungsöffnungen einem Mehrfachen des Gesamtquerschnitts der Belüftungsöffnungen entspricht.

Es hat sich gezeigt, daß bei einem solchermaßen ausgelegten Belüftungssystem der aerobe Abbauprozeß in den kompostierfähigen Abfällen wesentlich verbessert werden kann, weil nämlich unter Vermeidung von Geruchsbelästigungen über einen Zeitraum von 14 Tagen hinweg ein Masseverlust eintritt, der bei 13% der frischen Abfallmenge liegt. Demgegenüber ist bei Benutzung von Müllbehältern der eingangs angegebenen, bekannten Art bei großenteils anaerob stattfindendem Abbauprozeß, also unter Entstehung von Geruchsbelästigungen im gleichen Zeitraum nur ein Masseverlust und 6% der frischen Abfallmenge erreichbar. Der Masseverlust kann erfindungsgemäß also verdoppelt werden. Zugleich betrug die während der Lagerung der Abfälle im erfindungsgemäßen Müllbehälter angesammelte Wassermenge nur etwa 40,3% der im gleichen Zeitraum bei der Benutzung der bekannten Müllbehälter in diesen verbleibenden Wassermengen.

Es hat sich besonders bewährt, wenn nach Anspruch 3 bei dem als Zwischenboden vorgesehenen Gitterrost die Maschenweite zur Stegbreite in einem Verhältnis steht, das etwa zwischen 10:1 und 15:1 liegt.

Im einfachsten Falle kann der Gitterrost als Drahtgitterrost ausgeführt sein, bei dem die Einzeldrähte einen Durchmesser von bspw. 2 mm aufweisen, so daß die einzelnen Maschen eine Seitenlänge zwischen 20 und 30 mm aufweisen. Selbstverständlich wäre es aber auch möglich, Gitterroste zu verwenden, deren Stege aus hochkantstehenden Bandmaterialstreifen gebildet sind.

Gemäß Anspruch 4 wird vorgesehen, daß die Belüftungsöffnungen unterhalb der Einbauebene des Gitterrostes aber oberhalb des Gefäßbodens in den Gefäßwandungen, insbesondere den Gefäß-Seitenwandungen, angeordnet sind. Andererseits hat es sich - nach Anspruch 5 - aber als besonders empfehlenswert erwiesen, wenn die Belüftungsöffnungen zu einem größeren Teil - z.B. zu 2/3 - unterhalb und zu einem kleineren Teil - bspw. zu 1/3 - oberhalb der Einbauebene des Gitterrostes in den Gefäßwandungen, insbesondere den Gefäß-Seitenwandungen, angeordnet sind.

Als besonders günstig hat es sich dabei in jedem Falle erwiesen, wenn gemäß Anspruch 6, die Belüftungsöffnungen in Form von sogenannten Lochrosetten in den sich gegenüberliegenden Seitenwandungen angeordnet sind. Nach Anspruch 7 können dabei auch die Lüftungsöffnungen in Form von sogenannten Lochrosetten vorzugsweise mittig in den sich gegenüberliegenden Seitenwandungen angeordnet werden, wobei sie - vorzugsweise - ein den Belüftungsöffnungen entsprechendes Lochbild haben.

Selbstverständlich kann die nach Ansprüchen 6 und 7 vorgesehene Vielzahl von kleinen Löchern auch durch eine oder mehrere große Öffnungen, z.B. Schlitze, ersetzt werden.

Besonders bewährt hat es sich für das erfindungsgemäße Durchlüftungssystem, wenn nach Anspruch 8 die Abstandshalter als von den Innenflächen der Wandungen des Aufnahmegefäßes abstehende und in Aufwärtsrichtung verlaufende Rippen oder Stege ausgebildet sind.

Wenn die Abstandshalter aus Rippen oder Stegen bestehen, dann erweist es sich als empfehlenswert, diese gemäß Anspruch 9 einstückig an die Wandungsinnenflächen des Aufnahmegefäßes so anzuformen, daß sie sich zumindest über dessen oberhalb des Gitterrostes befindliche Höhe erstrecken.

Nach Anspruch 10 können auch wenigstens einige Rippen oder Stege unterhalb der Einbauebene des Gitterrostes vorgesehen werden, die eine größere Profilhöhe aufweisen als die oberhalb des Gitterrostes vorgesehenen Rippen, so daß deren freie Endflächen Stützauflagen für den Gitterrost bilden können. Der Gitterrost kann dabei einfach lose aufliegend eingebaut werden. Besonders empfehlenswert ist es jedoch, ihn mit Hilfe von Scharnieren klappbeweglich innerhalb des Aufnahmegefäßes zu lagern.

Für eine optimale Ausbildung des Durchlüftungssystems erweist es sich als empfehlenswert, wenn gemäß Anspruch 11 die normale Profilhöhe der Rippen oder Stege zwischen 5 und 25 mm liegt.

Nach Anspruch 12 ist ferner vorgesehen, daß wenigstens die die Entlüftungsöffnungen bildenden Einzellöcher einen Durchmesser aufweisen, welcher mindestens gleich der Dicke der Gefäß- und Deckelwandungen bemessen ist und dabei - vorzugsweise - 4 mm beträgt. Es kann hierdurch nämlich vermieden werden, daß eventuell entstehende Kondenswasserfilme oder -tropfen die Öffnungsquerschnitte der Entlüftungsöffnungen überspannen und dadurch dem Entweichen von Wasserdampf entgegenwirken. Auch Entlüftungsöffnungen in Form von Schlitzen können dem gleichen Zweck dienen.

Eine optimale Ausbildung des erfindungsgemäßen Durchlüftungssystems kann erreicht werden, wenn nach Anspruch 13 der Gesamtquerschnitt der Lüftungsöffnungen in den Seitenwandungen des Aufnahmegefäßes und der Entlüftungsöffnungen im Deckel zum Gesamtquerschnitt der Belüftungsöffnungen in einem Verhältnis von etwa 10:1 steht. Durch die bei den aeroben Abbauprozessen entstehende Wärme wird dann nämlich gewissermaßen eine Konvektionsströmung innerhalb des Müllbehälters aufgebaut, die nicht nur einen weitestgehenden Abtransport des im Abfall enthaltenen und beim Abbauprozeß entstehenden Wassers in Form von Wasserdampf nach oben aus dem Müllbehälter heraus bewirkt, sondern zugleich auch ein intensives Nachströmen sauerstoffreicher Außenluft in das Innere des Müllbehälters hervorruft und dadurch die Aufrechterhaltung des aeroben Abbauprozesses sicherstellt.

Nach Anspruch 14 hat es sich in weiterer Ausgestaltung der Erfindung als empfehlenswert erwiesen, wenn der Gesamtquerschnitt der sich im Deckel befindenden Entlüftungsöffnungen zum Gesamtquerschnitt der Belüftungsöffnungen in einem Verhältnis von etwa 9:1 steht. Folglich können in den Seitenwandungen des Aufnahmegefäßes Lüftungsöffnungen enthalten sein, deren Gesamtquerschnitt etwa gleich dem Gesamtquerschnitt der Belüftungsöffnungen ist.

Wenn Müllbehälter mit einem erfindungsgemäßen Durchlüftungssystem frei aufgestellt werden, also auch der Einwirkung von Regen ausgesetzt sind, kann es sich als vorteilhaft erweisen, daß nach Anspruch 15 die Entlüftungsöffnungen im Deckel mit Abstand unterhalb einer Regenschutz-Überdeckung liegen, die sich bspw. als Aufsatzelement nachträglich auf dem Deckel anbringen läßt.

Denkbar ist es aber auch, die Entlüftungsöffnungen mit einem hochstehenden Kragen zu umgeben oder sie zwischen hochragenden Rippen oder Stegen anzuordnen. Auf die Deckelaußenseite gelangendes Wasser kann dann abfließen, ohne in das Innere des Müllgefäßes zu gelangen. Gegebenenfalls kann der Deckel auch insgesamt durch eine auf das Aufnahmegefäß aufsetzbares Entlüftungsdach ersetzt werden.

Eine Ausbildung nach Anspruch 16 sieht ferner vor, daß der unterhalb des Zwischenbodens und auch unterhalb der Belüftungsöffnungen gelegene Abschnitt des Aufnahmegefäßes einen Wassersammelraum bildet, in dem das aus den Abfällen abgeschiedene Wasser aufgefangen werden kann, weil es einen von reinem Wasser mehr oder weniger stark abweichenden pH-Wert aufweist, und zwar meistens unter dem Wert 7 liegt und damit sauer ist. Außerdem ist es auch stark mit organischen Stoffen belastet.

Als zweckmäßig kann es sich schließlich herausstellen, wenn nach Anspruch 17 der Wassersammelraum mit einem Wasserablauf versehen ist. Dessen Mündung könnte dabei geringfügig oberhalb des höchsten Füllniveaus des Wassersammelraums an der Stirnwand des Aufnahmegefäßes liegen, wo sie dann mit einem Wasser-Sammelbehälter des Müll-Entsorgungsfahrzeuges verbindbar ist, bspw. dann, wenn der Müllbehälter mit Hilfe einer Hub-Kippvorrichtung in das Müll-Entsorgungsfahrzeug entleert wird. Auf diese Art und Weise ist nämlich sichergestellt, daß nicht nur die dem aeroben Abbauprozeß unterworfenen Abfälle, sondern auch das gleichzeitig anfallende (saure und schadstoffbelastete) Wasser umweltfreundlich entsorgt und vor Wiederverwendung ordnungsgemäß aufbereitet werden können.

Es besteht aber auch die Möglichkeit - vorzugsweise innerhalb des Aufnahmegefäßes - einen Schacht oder dergleichen auszubilden, welcher vom Wassersammelraum bis zur Oberkante des Aufnahmegefäßes führt und aus dem dann das Wasser bei der Entleerung abfließt. Das Wasser kann gegebenenfalls aber auch aus dem Wassersammelraum abgesaugt werden, bevor die eigentliche Entleerung des Aufnahmegefäßes stattfindet.

Die Erfindung wird nachfolgend an in der Zeichnung dargestellten Ausführungsbeispielen erläutert.

Es zeigen

Figur 1 einen Vertikalschnitt durch einen Müllbehälter entlang der Linie I-I in Fig. 2,

Figur 2 eine Draufsicht auf den Müllbehälter nach Fig. 1 bei geöffnetem Klappdeckel,

Figur 3 in größerem Maßstab die in Fig. jeweils mit III gekennzeichneten Bereiche in etwas abgewandelter Ausführung,

Figur 4 ebenfalls in größerem Maßstab eine Unteransicht vom Klappdeckel des Müllbehälters nach den Fig. 1 und 2 und

Figur 5 einen Schnitt entlang der Linie V-V durch den Klappdeckel nach Fig. 4.

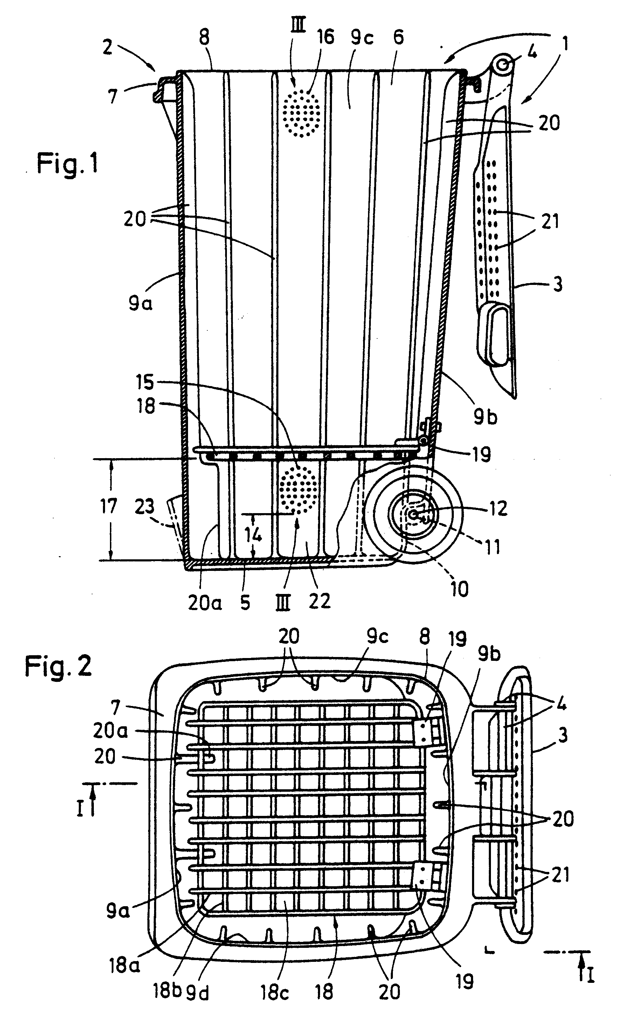

Die Fig. 1 und 2 der Zeichnung zeigen einen Müllbehälter 1, der seiner Bauart nach weitestgehend mit einem sogenannten Standard-Müllbehälter übereinstimmt. Er weist nämlich ein Aufnahmegefäß 2 und einen Klappdeckel 3 auf, wobei Letzterer mit dem Ersteren durch Scharniere 4 in ständiger Gelenkverbindung steht. Sowohl das Aufnahmegefäß als auch der Klappdeckel 3 bestehen dabei normalerweise aus Kunststoff-Formteilen. Gegebenenfalls können sie jedoch auch aus anderen Werkstoffen gefertigt werden.

Das Aufnahmegefäß 2 des Müllbehälters 1 weist üblicherweise einen im wesentlichen rechteckigen oder quadratischen Querschnitt auf und ist unten durch einen einstückig angeformten Boden 5 abgeschlossen. Seine oben liegende Öffnung 6 wird außen von einem kragenartig profilierten Verstärkungsrand 7 begrenzt, welcher wiederum von einem Öffnungsrand 8 überragt ist. Der Verstärkungsrand 7 ist dabei so ausgebildet, daß er sich von der Hub-Kippvorrichtung eines Müll-Entsorgungsfahrzeuges erfassen läßt, wenn der Müllbehälter 1 in Letzteres entleert werden soll. Der Öffnungsrand 8 schließt sich in Verlängerung der Stirnwand 9a, der Rückwand 9b sowie der Seitenwände 9c und 9d des Aufnahmegefäßes 2 nach oben an den Verstärkungsrand 7 an.

Im Anschluß an den Boden 5 ist in die Rückwand 9b des Aufnahmegefäßes 2 eine Einbuchtung 10 eingeformt (Fig. 1), die Lageraugen 11 enthält, in denen eine Achse 12 gehalten ist, die wiederum an jedem ihrer beiden Enden ein Laufrad 13 drehbeweglich trägt. Mittels der beiden Laufräder 13 kann der Müllbehälter 1 problemlos verfahren werden, wobei in üblicher Weise als Bedienungsgriff für die Manipulation des Müllbehälters 1 die Scharniere 4 benutzt werden können, welche den Klappdeckel 3 mit dem Aufnahmegefäß 2 verbinden.

In Fig. 1 der Zeichnung ist gezeigt, daß die Seitenwände 9c und 9d des Aufnahmegefäßes 2 mit Abstand 14 über dem Boden 5 eine Vielzahl von Belüftungsöffnungen 15 aufweist, die bspw. in Form einer sogenannten Lochrosette vorgesehen sind. Die die Belüftungsöffnungen 15 bildende Lochrosette ist dabei vorzugsweise an einer Stelle der jeweiligen Seitenwand 9c, 9d vorgesehen, die etwa mittig zwischen der Einbuchtung 10 der Rückwand 9b und der Stirnwand 9a liegt. Lüftungsöffnungen 16 in Form einer ähnlichen Lochrosette befinden sich ebenfalls in beiden Seitenwandungen 9c, 9d des Aufnahmegefäßes 2, und zwar an einer Stelle, die unmittelbar unterhalb des Versteifungsrandes 7 etwa auf halber Breite derselben gelegen ist. Es können auch mehrere Lochrosetten in den Seitenwandungen 9c, 9d und/oder in der Stirnwand 9a bzw. der Rückenwand 9b vorgesehen werden.

Mit Abstand 17 oberhalb des Bodens 5 ist innerhalb des Aufnahmegefäßes 2 ein Gitterrost 18 um Scharniere 19 an der Rückwand 9b beweglich angelenkt, und zwar derart, daß er entweder in einer zum Boden 5 parallelen Ebene abgestützt wird oder aber in eine zur Rückwand 9b wenigstens annähernd parallele Lage hochgeschwenkt werden kann.

In seiner zum Boden 5 parallelen Abstützlage bildet dabei der Gitterrost 18 im Aufnahmegefäß 2 einen Zwischenboden bzw. Abfallträger, der verhindert, daß die in das Aufnahmegefäß 2 eingefüllten Abfälle bis zum Boden 5 hin gelangen können.

Bewährt hat es sich, den Gitterrost 18 als Drahtgitterrost auszubilden, bei dem die Seitenlänge der einzelnen Rostmaschen 18c zum Querschnitt der längsverlaufenden Roststäbe 18a und der querverlaufenden Roststäbe 18b in einem Verhältnis steht, das etwa 10:1 und 15:1 liegt. Bei einem Querschnittsmaß der Roststäbe 18a und 18b von bspw. 2 mm kann also die Seitenlänge der einzelnen Maschen 18c zwischen 20 und 30 mm betragen.

Selbstverständlich ist es ohne weiteres möglich, anstelle eines aus Drahtstäben gefertigten Gitterrostes 18 einen aus hochkantstehendem, flachem Bandmaterial gefertigten Gitterrost 18 zu benutzen, falls dies zweckmäßig erscheint.

Zumindest oberhalb der durch den Abstand 17 bestimmten Einbauebene des Gitterrostes 18 sind diesem innerhalb des Aufnahmegefäßes 2 in Zuordnung zur Stirnwand 9a, zur Rückwand 9b sowie zu den beiden Seitenwänden 9c und 9d besondere Abstandshalter zugeordnet.

Beim Ausführungsbeispiel nach den Fig. 1 und 2 werden diese Abstandshalter durch von den Innenflächen der Stirnwand 9a, der Rückwand 9b sowie der Seitenwände 9c und 9d des Aufnahmegefäßes 2 abstehende sowie in Aufwärtsrichtung verlaufende Rippen oder Stege 20 gebildet. Diese Rippen oder Stege 20 können, wenn das Aufnahmegefäß 2 ein Kunststoff-Formteil ist, unmittelbar einstückig an die Innenflächen von Stirnwand 9a, Rückwand 9b sowie Seitenwänden 9c und 9d angeformt werden, und zwar so, daß sie mit ihren freien Endkanten bis dicht an die Umfangsbegrenzungen des Gitterrostes 18 heranreichen (Fig. 2). Vorteilhaft können dabei die Rippen oder Stege 20 auch bis zum Boden 5 des Aufnahmegefäßes 2 heruntergeführt werden, wobei dann einige Rippen oder Stege über den Abstand 17 hinweg mit einer größeren Profilhöhe 20a versehen werden können und deren obere Endkanten dann eine Stützauflage für en Gitterrost 18 bilden.

In der Praxis hat es sich bewährt, wenn die als Abstandshalter dienenden Rippen oder Stege 20 in ihrem oberhalb des Gitterrostes 18 liegenden Bereich eine normale Profilhöhe aufweisen, die zwischen 5 und 25 mm liegt.

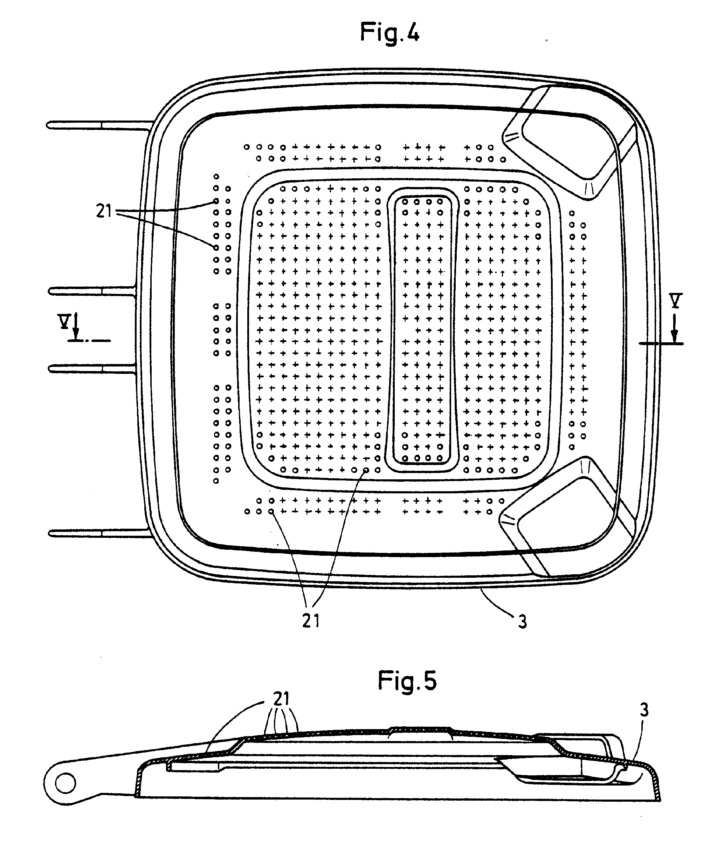

Den Fig. 1 und 2, insbesondere aber den Fig. 4 und 5 kann entnommen werden, daß der Klappdeckel 3 mit einer großen Zahl von über seine Gesamtfläche verteilt angeordneten Entlüftungsöffnungen 21 versehen ist. Auch die Lüftungsöffnungen 21 sind dabei beim Ausführungsbeispiel, ähnlich den Belüftungsöffnungen 15 und den Lüftungsöffnungen 16, durch Rundlöcher gebildet. Sie müssen jedoch nicht unbedingt als relativ kleine Rundlöcher ausgeführt werden, sondern können vielmehr auch durch größere Schlitze oder dergleichen gebildet sein.

Der Gesamtquerschnitt der Lüftungsöffnungen 16 und der Entlüftungsöffnungen 21 kann dabei so bemessen werden, daß er einem Vielfachen des Gesamtquerschnitts der Belüftungsöffnungen 15 entspricht. Er kann z.B. hierzu in einem Verhältnis von 10:1 stehen. Die Lüftungsöffnungen 16 in den Seitenwänden 9c und 9b des Aufnahmegefäßes 2 stehen vorzugsweise hinsichtlich ihres Durchlaßquerschnitts zu den Belüftungsöffnungen 15 im Verhältnis 1:1. Somit ergibt sich dann als Querschnittsverhältnis für die im Klappdeckel 3 vorgesehenen Entlüftungsöffnungen 21 zu den Belüftungsöffnungen 15 der Wert 9:1.

Ein wichtiges Ausbildungskriterium für die Lüftungsöffnungen 16 und Entlüftungsöffnungen 21, und zwar insbesondere für die Entlüftungsöffnungen 21 im Klappdeckel 3, kann darin liegen, daß jedes einzelne Rundloch derselben einen Durchmesser aufweist, welcher mindestens gleich der Wandungsdicke des Aufnahmegefäßes 2 bzw. des Klappdeckels 3 ist und - vorzugsweise - wenigstens 4 mm beträgt. Es hat sich nämlich gezeigt, daß hierdurch einem unerwünschten Verschließen der Einzellöcher durch Kondenzwasserfilme bzw. -tropfen wirksam begegnet werden kann. Die gleiche Wirkung läßt sich aber auch erzielen, wenn insbesondere die Entlüftungsöffnungen 21 im Klappdeckel 3 in Form von Schlitzen oder dergleichen vorgesehen werden.

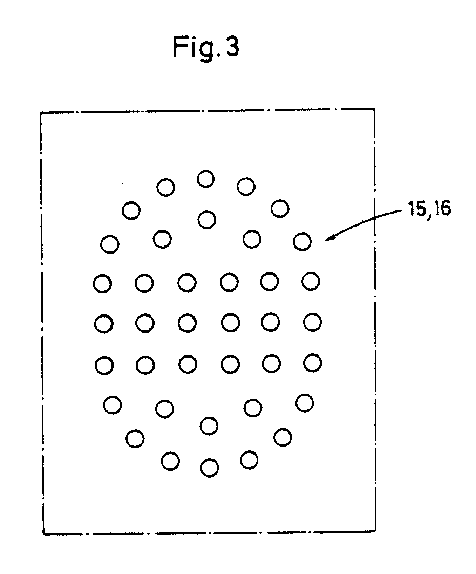

Während in Fig. 1 sowohl die die Belüftungsöffnungen 15 als auch die die Lüftungsöffnungen 16 bildende Lochrosette eine im wesentlichen kreisförmige Umfangsbegrenzung hat, ist in Fig. 3 eine Lochrosette gezeigt, die mit einer langrunden bzw. etwa ovalen Umfangsbegrenzung ausgestattet ist.

Eine Lochrosette mit ovaler bzw. langrunder Umfangsbegrenzung läßt sich mit Vorteil zur Bildung der Belüftungsöffnungen 15 benutzen und zwar dann, wenn diese nicht insgesamt unterhalb der Einbauebene des Gitterrostes 18 liegen sollen, wie das in Fig. 1 gezeigt ist, sondern sich zum Teil oberhalb und zum Teil unterhalb dieser Einbauebene befinden. Es ist nämlich auf einfache Weise möglich, die langrund bzw. oval begrenzte Lochrosette zum größeren Teil - z.B. zu 2/3 - unterhalb und zum kleineren Teile - bspw. zu 1/3 - oberhalb der Einbauebene des Gitterrostes 18 in den Seitenwänden 9c und 9d des Aufnahmegefäßes 2 vorzusehen.

Die in das Aufnahmegefäß 2 des Müllbehälters 1 eingefüllten, kompostierfähigen Abfälle werden nach unten vom Gitterrost 18 abgestützt, so daß der unterhalb des Gitterrostes 18 befindliche Raum hiervon freibleibt. Die als Abstandshalter dienenden Rippen oder Stege 20 an den Innenflächen von Stirnwand 9a, Rückwand 9b sowie Seitenwänden 9c und 9d verhindern dabei, daß die kompostierfähigen Abfälle dort zur dichten Anlage kommen.

Die unterhalb des Gitterrostes 18 durch die Belüftungsöffnungen 15 eintretende, sauerstoffreiche Luft kann einerseits durch den weitmaschigen Gitterrost 18 von unten her in die kompostierfähigen Abfälle eindringen sowie auch im Bereich der Rippen oder Stege 20 an den Innenflächen des Aufnahmegefäßes 2 in Aufwärtsrichtung entlangströmen. Durch die sauerstoffreiche Luft wird in den Abfällen ein aerober Abbau in Gang gesetzt, der zu einer relativ hohen Wärmeentwicklung führt. Diese Wärmeentwicklung führt gewissermaßen zur Ausbildung einer Konvektionsströmung innerhalb des Müllbehälters 1.

Eine Folge der Wärmeentwicklung innerhalb des Müllbehälters 1 ist, daß der größte Teil des in den Abfällen enthaltenen Wassers in die Dampfphase übergeht und mit der Konvektionsströmung nach oben geführt wird, wo sie durch die Entlüftungsöffnungen 21 und gegebenenfalls die Lüftungsöffnungen 16 ins Freie tritt.

Die Ausbildung einer intensiven Aufwärtsströmung wird dadurch begünstigt, daß der Gesamtquerschnitt der Entlüftungsöffnungen 21 im Klappedeckel 3 größer bemessen ist als derjenige der Belüftungsöffnungen 15.

Da ein Teil der durch die Belüftungsöffnungen 15 zugeführten Luft im Bereich der Rippen oder Stege 20 entlang der Innenflächen des Aufnahmegefäßes 2 nach oben strömt, wird verhindert, daß der entstandene Wasserdampf sich an den Wandflächen des Aufnahmegefäßes 2 niederschlägt. Deshalb gelangen nur relativ geringe Wassermengen in flüssiger Form in den unteren Teil des Aufnahmegefäßes. Dort wird das Wasser in dem oberhalb des Bodens 5 und unterhalb der Belüftungsöffnungen 15 gelegenen Sammelraum 22 aufgefangen.

Damit das im Sammelraum 22 aufgefangene Wasser beim Entleeren des Müllbehälters 1 mit Hilfe der Hub-Kippvorrichtung eines Müll-Entsorgungsfahrzeuges nicht wieder in die dem aeroben Abbauprozeß unterworfenen Abfälle zurückgelangt, sollte für eine gesonderte Entleerung des Sammelraums 22 Sorge getragen werden. Hierzu wäre es bspw.

möglich, den Wassersammelraum 22 mit einem Wasserablauf 23 auszustatten, dessen Mündung geringfügig oberhalb des höchstmöglichen Füllniveaus für den Wassersammelraum liegt und sich dabei an der Stirnwand 9a befindet, wie das in Fig. 1 durch strichpunktierte Linien angedeutet ist. Die Mündung des Wasserablaufs 23 könnte dabei mittels der Hub-Kippvorrichtung so über einen auf dem Müll-Entsorgungsfahrzeug montierten Wasser-Sammelbehälter gebracht werden, daß das im Sammelraum 22 befindliche Wasser in diesen Wasser-Sammelbehälter ausläuft bevor der eigentliche Entleerungsvorgang des Müllbehälters 1 für die darin befindlichen Abfälle eingeleitet wird. Die gleiche Wirkung läßt sich gegebenenfalls erzielen durch einen vom Wassersammelraum 22 zur Öffnung 6 des Aufnahmegefäßes 2 hochgeführten Schacht, aus dem dann das Wasser beim Entleerungsvorgang ausläuft. Endlich läßt sich aber das Wasser auch vor dem eigentlichen Entleerungsvorgang absaugen.

Abschließend sei noch erwähnt, daß es bei völlig freier Aufstellung des Müllbehälters 1 zweckmäßig ist, die Entlüftungsöffnungen 21 im Klappedeckel 3 gegen das unerwünschte Eindringen von Regenwasser abzuschirmen, und zwar im einfachsten Falle dadurch, daß auf den Klappedeckel 3 eine besondere Regenschutz-Überdachung unter gewisser Abstandshalterung aufgesetzt wird. Diese Regenschutz-Überdachung kann eine dem Klappdeckel 3 entsprechende Umrißform erhalten und mit Hilfe von Abstandsstegen, bspw. am Deckelrand verrastet, verklebt oder verschraubt werden.

Damit das Eindringen von Wasser vermieden wird, können die Entlüftungsöffnungen 21 auch von ringförmig hochragenden Kragen umgeben sein oder zwischen aufragenden Stegen und Rippen liegen, die sich auf der Oberseite des Klappdeckels 3 befinden.

Möglich wäre es schließlich aber auch, den Klappdeckel 3 selbst durch ein besonderes Regendach zu ersetzen, welches die Öffnung 6 des Aufnahmegefäßes 2 überfängt.

## Patentansprüche

1. Müllbehälter mit Durchlüftungssystem zur Aufnahme von kompostierfähigen Abfällen, dessen durch einen Deckel (3), insbesondere einen Klappedeckel, verschließbares Aufnahmegefäß (2) in seinen Wandungen zumindest bereichsweise mit Luftdurchtrittsöffnungen versehen ist sowie mit Abstand oberhalb des Gefäßbodens einen luftdurchlässigen Zwischenboden (18) als Abfallträger enthält, in dessen Bereich Belüftungsöffnungen (15) in den Wandungen (9c, 9d) des Aufnahmegefäßes (2) vorgesehen sind, während sich unterhalb des Öffnungsrandes (8) des Aufnahmegefäßes (2) in den Wandungen (9c, 9d) zusätzlich Lüftungsöffnungen (16) befinden,
**dadurch gekennzeichnet,**
daß der Zwischenboden aus einem Gitterrost (18) besteht, der eine im Verhältnis zu seiner Stegbreite große Maschenweite aufweist, daß den Innenflächen der Wandungen (9a, 9b, 9c, 9d) des Aufnahmegefäßes (2) vorzugsweise und zumindest über den oberhalb des Gitterrostes (18) gelegenen Höhenbereich hinweg verlaufend Abstandshalter (20) für die Abfälle zugeordnet sind
und daß der Deckel (3) mit Entlüftungsöffnungen (21) versehen ist.

2. Durchlüftungssystem nach Anspruch 1,
**dadurch gekennzeichnet,**
daß der Gesamtquerschnitt der Lüftungsöffnungen (16) und der Entlüftungsöffnungen (21) einem Mehrfachen des Gesamtquerschnitts der Belüftungsöffnungen (15) entspricht.

3. Durchlüftungssystem nach Anspruch 1,
**dadurch gekennzeichnet,**
daß die Maschenweite zur Stegbreite des Gitterrostes (18) etwa bei einem Verhältnis zwischen 5:1 und 15:1 liegt.

4. Durchlüftungssystem nach einem der Ansprüche 1 bis 3,
**dadurch gekennzeichnet,**
daß die Belüftungsöffnungen (15) unterhalb der Einbauebene des Gitterrostes (18) aber oberhalb des Gefäßbodens (5) in den Gefäßwandungen, insbesondere Gefäß-Seitenwandungen (9c, 9d) angeordnet sind.

5. Durchlüftungssystem nach einem der Ansprüche 1 bis 3,
**dadurch gekennzeichnet,**
daß die Belüftungsöffnungen (15) zu einem größeren Teil - z.B. zu 2/3 - unterhalb und zum kleineren Teil - bspw. zu 1/3 - oberhalb der Einbauebene des Gitterrostes (18) in den Gefäßwandungen, insbesondere den Gefäß-Seitenwandungen (9c, 9d), angeordnet sind.

6. Durchlüftungssystem nach einem der Ansprüche 1 bis 5,
**dadurch gekennzeichnet,**
daß die Belüftungsöffnungen (15) in Form von sogenannten Lochrosetten in den sich gegenüberliegenden Seitenwandungen (9c, 9d) angeordnet sind.

7. Durchlüftungssystem nach einem der Ansprüche 1 bis 6,
**dadurch gekennzeichnet,**

daß auch die Lüftungsöffnungen (16) in Form von sogenannten Lochrosetten vorzugsweise mittig in den sich gegenüberliegenden Seitenwandungen (9c und 9d) angeordnet sind und - ebenfalls vorzugsweise - ein den Belüftungsöffnungen (15) entsprechendes Lochbild haben (siehe Fig. 1 und 3).

8. Durchlüftungssystem nach einem der Ansprüche 1 bis 7,
**dadurch gekennzeichnet,**
daß die Abstandshalter als von den Innenflächen der Wandungen (9a bis 9d) des Aufnahmegefäßes (2) abstehende und in Aufwärtsrichtung verlaufende Rippen oder Stege (20) ausgebildet sind.

9. Durchlüftungssystem nach einem der Ansprüche 1 bis 8,
**dadurch gekennzeichnet,**
daß die Rippen oder Stege (20) einstückig an die Wandungsinnenflächen des Aufnahmegefäßes (2) angeformt sind und sich zumindest über dessen oberhalb des Gitterrostes (18) befindliche Höhe erstrecken (siehe Fig. 1 und 2).

10. Durchlüftungssystem nach einem der Ansprüche 1 bis 9,
**dadurch gekennzeichnet,**
daß wenigstens einige Rippen oder Stege (20) auch unterhalb der Einbauebene des Gitterrostes (18) vorgesehen sind, die eine größere Profilhöhe (20a) aufweisen als die oberhalb des Gitterrostes (18) vorgesehenen Rippen (20), wobei deren freie Endflächen Stützauflagen für den Gitterrost (18) bilden (siehe Fig. 1 und 2).

11. Durchlüftungssystem nach einem der Ansprüche 1 bis 10,
**dadurch gekennzeichnet,**
daß die normale Profilhöhe der Rippen oder Stege (20), zumindest oberhalb der Einbauebene des Gitterrostes (18) zwischen 5 und 25 mm liegt.

12. Durchlüftungssystem nach einem der Ansprüche 1 bis 11,
**dadurch gekennzeichnet,**
daß wenigstens die die Entlüftungsöffnungen (21) im Klappdeckel (3) bildenden Einzellöcher einen Durchmesser aufweisen, der mindestens gleich der Dicke der Gefäß- und Deckelwandungen bemessen ist und - vorzugsweise - 4 mm beträgt, oder daß diese Entlüftungsöffnungen (21) aus Schlitzen oder dergleichen bestehen.

13. Durchlüftungssystem nach einem der Ansprüche 1 bis 12,
**dadurch gekennzeichnet,**

daß der Gesamtquerschnitt der Entlüftungsöffnungen (21) und der Lüftungsöffnungen (16) zum Gesamtquerschnitt der Belüftungsöffnungen (15) in einem Verhältnis von etwa 10:1 steht.

14. Durchlüftungssystem nach einem der Ansprüche 1 bis 13,
**dadurch gekennzeichnet,**
daß der Gesamtquerschnitt der sich im Klappdeckel (3) befindenden Entlüftungsöffnungen (21) zum Gesamtquerschnitt der Belüftungsöffnungen (15) in einem Verhältnis von etwa 9:1 steht.

15. Durchlüftungssystem nach einem der Ansprüche 1 bis 14,
**dadurch gekennzeichnet,**
daß die Entlüftungsöffnungen (21) im Klappdeckel (3) mit Abstand unterhalb einer Regenschutz-Überdeckung liegen.

16. Durchlüftungssystem nach einem der Ansprüche 1 bis 15,
**dadurch gekennzeichnet,**
daß der unterhalb des Gitterrostes (18) und auch unterhalb der Belüftungsöffnungen (15) gelegene Abschnitt (Abstand 14) des Aufnahmegefäßes (2) einen Wassersammelraum (22) bildet.

17. Durchlüftungssystem nach einem der Ansprüche 1 bis 16,
**dadurch gekennzeichnet,**
daß der Wassersammelraum (22) mit einem Wasserablauf (23) versehen ist, dessen Mündung geringfügig oberhalb seines höchsten Füllniveaus (Abstand 14) an der Stirnwand (9a) des Aufnahmegefäßes (2) liegt und der mit einem Wasser-Sammelbehälter des Müll-Entsorgungsfahrzeuges verbindbar ist.

18. Durchlüftungssystem nach Anspruch 16,
**dadurch gekennzeichnet,**
daß der Wassersammelraum (22) mit einem an eine Absaugeinrichtung anschließbaren Wasserablauf versehen ist, welcher bis dicht an den Boden (5) des Aufnahmegefäßes (2) heranreicht.

19. Durchlüftungssystem nac Anspruch 16,
**dadurch gekennzeichnet,**
daß vom Wassersammelraum (22) ein Wasserablaufschacht bis zum Rand der Öffnung (6) des Aufnahmegefäßes (2) hochgeführt ist.

20. Durchlüftungssystem nach einem der Ansprüche 1 und 12 bis 15,
**dadurch gekennzeichnet,**
daß der Klappdeckel (3) durch ein auf das Aufnahmegefäß (2) aufsetzbares Entlüftungsdach ersetzbar ist.

**Claims**

1. A refuse bin having an aeration system for receiving compostable waste, in which the container (2), which can be closed by a lid (3), in particular a hinged lid, is provided in its walls, at least region by region, with ventilation apertures and also, at a distance above the base of the container, contains a false floor penetrable by air (18) as a waste support, in the region of which ventilation apertures (15) are provided in the walls (9c, 9d) of the container (2), while in addition aeration apertures (16) are located beneath the opening edge (8) of the container (2) in the walls (9c, 9d), **characterised in that** the false floor consists of a grid (18), which has a large mesh size in proportion to its web width,
   **in that** with the inner surfaces of the walls (9a, 9b, 9c, 9d) of the container (2) are associated distance pieces (20) for the refuse, which extend preferably and at least over the vertical region located above the grid (18),
   **and in that** the lid (3) is provided with vents (21).

2. An aeration system according to Claim 1, **characterised in that** the overall cross section of the aeration apertures (16) and of the vents (21) corresponds to a multiple of the overall cross section of the ventilation apertures (15).

3. An aeration system according to Claim 1, **characterised in that** the ratio of the mesh size to the web width of the grid (18) is roughly between 5:1 to 15:1.

4. An aeration system according to one of Claims 1 to 3, **characterised in that** the ventilation apertures (15) are disposed beneath the mounting plane of the grid (18) but above the container base (5) in the container walls, in particular in the container side walls (9c, 9d).

5. An aeration system according to one of Claims 1 to 3, **characterised in that** the ventilation apertures (15) are disposed to a greater extent - e.g. 2/3 - below and to a lesser extent - e.g. 1/3 - above the mounting plane of the grid (18) in the container walls, in particular in the container side walls (9c, 9d).

6. An aeration system according to one of Claims 1 to 5, **characterised in that** the ventilation apertures (15) in the form of socalled rosettes of holes are disposed in the opposite side walls (9c, 9d).

7. An aeration system according to one of Claims 1 to 6, **characterised in that** the aeration apertures (16) in the form of socalled rosettes of holes are also disposed preferably in the middle of the opposite side walls (9c and 9d) and - also preferably - have a hole pattern corresponding to the ventilation apertures (15) (see Fig. 1 and 3).

8. An aeration system according to one of Claims 1 to 7, **characterised in that** the distance pieces are constructed as ribs or webs (20) protruding from the inner surfaces of the walls (9a to 9d) of the container (2) and extending in the upward direction.

9. An aeration system according to one of Claims 1 to 8, **characterised in that** the ribs or webs (20) are formed in one piece on the inner surfaces of the walls of the container (2) and extend at least over its height above the grid (18) (see Fig. 1 and 2).

10. An aeration system according to one of Clams 1 to 9, **characterised in that** at least some ribs or webs (20) are also provided beneath the mounting plane of the grid (18), which have a greater profile height (20a) than the ribs (20) provided above the grid (18), their free end faces forming supports for the grid (18) (see Fig. 1 and 2).

11. An aeration system according to one of Claims 1 to 10, **characterised in that** the normal profile height of the ribs or webs (20) lies between 5 and 25 mm, at least above the mounting plane of the grid (18).

12. An aeration system according to one of Claims 1 to 11, **characterised in that** at least the individual holes forming the vents (21) in the hinged lid (3) have a diameter which is at least equal to the thickness of the walls of the container and lid and is - preferably - 4 mm,
   **or in that** these vents (21) consist of slits or similar.

13. An aeration system according to one of Claims 1 to 12, **characterised in that** the ratio of the overall cross section of the vents (21) and of the aeration apertures (16) to the overall cross section of the ventilation apertures (15) is roughly 10:1.

14. An aeration system according to one of Claims 1 to 13,

**characterised in that** the ratio of the overall cross section of the vents (21) located in the hinged lid (3) to the overall cross section of the ventilation apertures (15) is roughly 9:1.

15. An aeration system according to one of Claims 1 to 14,
**characterised in that** the vents (21) in the hinged lid (3) lie at a distance beneath a rain protection covering.

16. An aeration system according to one of Claims 1 to 15,
**characterised in that** the section of the container (2) (distance 14) located beneath the grid (18) and also beneath the ventilation apertures (15) forms a water collection chamber (22).

17. An aeration system according to one of Claims 1 to 16,
**characterised in that** the water collection chamber (22) is provided with a water outlet (23), the opening of which lies slightly above its highest level (distance 14) at the front wall (9a) of the container (2) and which can be connected with a water collection tank of the refuse collection vehicle.

18. An aeration system according to Claim 16,
**characterised in that** the water collection chamber (22) is provided with a water outlet which can be connected to a suction device, and which extends right up against the base (5) of the container (2).

19. An aeration system according to Claim 16,
**characterised in that** from the water collection chamber (22) a water outlet shaft is conveyed up to the edge of the opening (6) of the container (2).

20. An aeration system according to one of Claims 1 and 12 to 15,
**characterised in that** the hinged lid (3) may be replaced by a ventilation roof which can be placed on the container (2).

**Revendications**

1. Poubelle équipée d'une ventilation pour des déchets compostables, dont le récipient (2) obturable par un couvercle (3), notamment un couvercle basculable, est équipé, dans ses parois, au moins dans certaines zones, d'ouvertures de passage d'air et comporte, à distance du fond du récipient un fond intermédiaire (18) perméable à l'air pour le support des déchets, dans la zone duquel des ouvertures d'aération (15) sont pratiquées dans les parois (9c, 9d) du récipient (2), des ouvertures d'aération (16) étant encore pratiquées dans des parois (9c, 9d), en dessous du bord de l'ouverture (8) du récipient (2),
caractérisée en ce que le fond intermédiaire consiste en une grille (18) qui présente une largeur de maille importante par rapport à son épaisseur de grille, en ce que les faces internes des parois (9a, 9b, 9c, 9d) du récipient (2) sont, de préférences, munies d'éléments d'entretoisement (20) pour les déchets, au moins dans la zone située au-dessus de la grille (18), et en ce que le couvercle (3) est muni d'ouvertures d'évacuation d'air (21).

2. Poubelle selon la revendication 1,
caractérisée en ce que la section globale des ouvertures d'aération (16) et d'évacuation d'air (21) correspond à un multiple de la section globale des ouvertures d'aération (15).

3. Poubelle selon la revendication 1,
caractérisée en ce que le rapport de la largeur de maille à l'épaisseur de grille (18) est approximativement comprise entre 5:1 et 15:1.

4. Poubelle selon l'une des revendications 1 à 3,
caractérisée en ce que les ouvertures d'aération (15) sont agencées en dessous du plan d'agencement de la grille (18) mais au-dessus du fond de récipient (5), dans les parois du récipient, notamment dans les parois latérales (9c, 9d).

5. Poubelle selon l'une des revendications 1 à 3,
caractérisée en ce que les ouvertures d'aération (15) sont pratiquées pour une large part, par exemple pour 2/3, en dessous du plan d'agencement de la grille (18), et pour une moindre part, par exemple 1/3, au-dessus du plan d'agencement de la grille (18), dans les parois de récipient, notamment les parois latérales (9c, 9d).

6. Poubelle selon l'une des revendications 1 à 5,
caractérisée en ce que les ouvertures d'aération (15) sont pratiquées dans les parois latérales opposées (9c, 9d) sous la forme d'une rosette ajourée.

7. Poubelle selon l'une des revendications 1 à 6,
caractérisée en ce que les ouvertures d'aération (18) sont également pratiquées sous forme de rosettes ajourées de préférence au centre des parois latérales opposées (9c et 9d) et ont aussi de préférence, une présentation correspondant à celle des ouvertures d'aération (15) (voir figures 1 et 3).

8. Poubelle selon l'une des revendications 1 à 7,

caractérisée en ce que les moyens d'entretoisement se présentent sous forme de nervures (20) s'étendant vers le haut, sur les faces internes des parois (9a à 9d) du récipient (2).

9. Poubelle selon l'une des revendications 1 à 8, caractérisée en ce que les nervures (20) sont formées d'une pièce avec la face interne de récipient (2) et s'étendent au moins sur la hauteur du récipient au-dessus de la grille (18) (voir figures 1 et 2).

10. Poubelle selon l'une des revendications 1 à 9, caractérisée en ce qu'au moins quelques nervures (20) sont aussi prévues en-dessous du plan d'agencement de la grille (18), qui présentent une hauteur de profilé (20a) plus importante que celle des nervures (20) agencées au-dessus de la grille (18), les surfaces extrèmes libres de celles-ci constituant des supports d'appui de la grille (18) (voir figures 1 et 2).

11. Poubelle selon l'une des revendications 1 à 10, caractérisée en ce que la hauteur normale des nervures (20) est comprise entre 5 et 25 mm, au moins au-dessus du plan d'agencement de la grille (18).

12. Poubelle selon l'une des revendications 1 à 11, caractérisée en ce qu'au moins les perçages qui constituent les ouvertures d'évacuation d'air (21) dans le couvercle basculable (3) présentent un diamètre qui est au moins égal à l'épaisseur des parois de récipient et de couvercle, de préférence de 4 mm, ou en ce que ces ouvertures d'évacuation d'air (21) consistent en des fentes ou analogues.

13. Poubelle selon l'une des revendications 1 à 12, caractérisée en ce que le rapport de la section globale des ouvertures d'évacuation d'air (21) et des ouvertures d'aération (16) par rapport à la section globale des ouvertures d'aération (15) est d'environ 10:1.

14. Poubelle selon l'une des revendications 1 à 13; caractérisée en ce que le rapport de la section globale des ouvertures d'évacuation d'air (21) pratiquées dans le couvercle basculable (3) par rapport à la section globale des ouvertures d'aération (15) est d'environ 9:1.

15. Poubelle selon l'une des revendications 1 à à 14, caractérisée en ce que les ouvertures d'évacuation d'air (21) pratiquées dans le couvercle (3) sont disposées à distance en dessous d'un recouvrement de protection contre la pluie.

16. Poubelle selon l'une des revendications 1 à 15, caractérisée en ce que la partie (distance 14) du récipient (2) disposée en dessous de la grille (18) et aussi en dessous des ouvertures d'aération (15) constitue un espace d'accumulation d'eau (22).

17. Poubelle selon l'une des revendications 1 à 16, caractérisée en ce que l'espace d'accumulation d'eau (22) est équipé d'une évacuation d'eau (23) dont l'embouchure est disposée légèrement au-dessus de son niveau de remplissage le plus élevé (distance 14), à la paroi frontale (9a) du récipient (2), et qui est reliable à un récipient d'accumulation d'eau du véhicule de collecte des immondices.

18. Poubelle selon l'une des revendications 1 à 17, caractérisée en ce que l'espace d'accumulation d'eau (22) est équipé d'une évacuation d'eau reliable à un dispositif d'aspiration, qui s'étend jusqu'à proximité du fond (5) du récipient (2).

19. Poubelle selon la revendication 16, caractérisée en ce qu'un canal d'évacuation d'eau est mené de l'espace d'accumulation d'eau (22) jusqu'au bord de l'ouverture (6) du récipient (2) .

20. Poubelle selon l'une des revendications 1 et 12 à 15, caractérisée en ce que le couvercle basculable est remplaçable par un toit d'évacuation d'air montable sur le récipient (2).

Fig.1

Fig.2

# Fig. 3

15,16

# Fig. 4

# Fig. 5